# EUROPÄISCHE PATENTSCHRIFT

(11) **EP 0 981 948 B1**
(45) Veröffentlichungstag und Bekanntmachung des Hinweises auf die Patenterteilung: **07.07.2004**
(21) Anmeldenummer: 99890270.4
(22) Anmeldetag: 23.08.1999
(51) Int. Cl.: A01G 1/08, E01C 11/22

(54) **Begrenzungsmauer, insbesondere für Beeteinfassungen, Frübeete, Abgrenzungen in Garten- und Grünanlagen oder dergleichen**
Edging wall, especially for bed edges, spring beds, demarcation in garden and green places or the like
Mur de délimitation, en particulier pour bordures, litières de printemps, démarcation de jardins ou zones vertes et similaires

(30) Priorität: 28.08.1998 AT 147398
(43) Veröffentlichungstag der Anmeldung: 01.03.2000
(73) Patentinhaber: Wüster, Heinrich, 6460 Imst/Tirol (AT)
(72) Erfinder: Wüster, Heinrich, 6460 Imst/Tirol (AT)
(74) Vertreter: Puchberger, Rolf

(56) Entgegenhaltungen:
- EP-A- 0 716 803
- DE-U- 29 807 973
- US-A- 3 343 301
- US-A- 5 375 369
- US-A- 5 445 362

## Beschreibung

Die Erfindung betrifft eine Begrenzungsmauer, insbesonders für Beeteinfassungen, Frühbeete, Abgrenzungen in Garten- und Grünanlagen oder dergleichen, mit aneinandergereihten und untereinander verbundenen, langgestreckten Bauelementen, die jeweils einen als nach unten offenes Hohlprofil ausgebildeten Grundkörper besitzen, der an beiden seitlichen Stirnseiten seitlich vorstehende Endabschnitte besitzt, die angeformte Verbindungselemente tragen.

### Stand der Technik:

Für die Herstellung von Begrenzungsmauern für Beeteinfassungen, Frühbeete, Abgrenzungen in Garten- und Grünanlagen etc. werden zumeist langgestreckte Bauelemente verwendet, die an ihren seitlichen Stirnseiten Verbindungselemente tragen, die sich beim Aneinanderreihen der Bauelemente gegenseitig überlappen und eine einachsige Verbindung zweier benachbarter Bauelemente ermöglichen.

Aus der CH 69 290 A ist eine von stehend angeordneten Betonplatten gebildete Beeteinfassung mit einachsiger Verbindung benachbarter Bauelemente bekannt, bei welcher komplementär zueinander ausgebildete und jeweils eine vertikale Hülse bildende Endabschnitte der Betonplatten einander gegenseitig überlappend ineinandergreifen und durch einen in die miteinander fluchtenden Hülsen eingesetzten Bolzen verbunden sind.

Aus der DE 91 07 366 U1 ist eine aus mit stirnseitig vorstehenden Drahtösen versehenen, bewehrten Betonblöcken gebildete Beeteinfassung mit einachsiger Verbindung benachbarter Betonblöcke bekannt, bei der die Betonblöcke mit ihren Drahtösen einander gegenseitig überlappend aneinandergereiht und durch in die miteinander vertikal fluchtenden Drahtösen eingesetzte, vertikale Bolzen paarweise verbunden sind.

Aus der US 4 869 018 A ist eine Beeteinfassung mit einachsiger Verbindung benachbarter Bauelemente bekannt, die als Gießwasserbehälter ausgebildet ist, der aus miteinander kommunizierenden und jeweils von einem Bauelement gebildeten Gefäßen besteht. Die untereinander gleichen und sich mit ihren stimseitigen Endabschnitten gegenseitig überlappenden Bauelemente sind als bis auf die seitlichen Austrittsöffnungen für das Gießwasser geschlossene Hohlkörper ausgebildet, deren das Gießwasser aufnehmende Hohlräume an den einander überlappenden Endabschnitten der Bauelemente jeweils durch eine Schlauchkupplung flüssigkeitsdicht miteinander verbunden sind.

Aus der EP 716 803 A1 ist eine Beeteinfassung mit einachsiger Verbindung benachbarter Bauelemente bekannt, die aus jeweils gleichen und mit ihren oberen bzw. unteren Endabschnitten einander gegenseitig überlappenden Bauelementen zusammengesetzt ist, wobei jedes Bauelement einen als nach unten offenes Hohlprofil ausgebildeten Grundkörper besitzt, bei dem an der einen seitlichen Stirnseite ein oberer Endabschnitt und an der anderen seitlichen Stirnseite ein unterer Endabschnitt vorsteht. An den oberen Endabschnitt ist ein von ihm nach unten abstehender, vertikaler Zapfen als Verbindungselement angeformt und der untere Endabschnitt enthält eine vertikale Hülse als zum Zapfen komplementäres Verbindungselement. Beim Aneinanderreihen dieser Bauelemente werden diese mit ihren oberen bzw. unteren Endabschnitten einander gegenseitig überlappend angeordnet und dabei die zueinander komplementären Verbindungselemente an den übereinanderliegenden Endabschnitten zweier benachbarten Bauelemente ineinandergesteckt, wodurch eine einachsige Verbindung zwischen den beiden benachbarten Bauelementen entsteht.

Aus der DE 298 07 973 U1 ist eine weitere Beeteinfassung mit einachsiger Verbindung benachbarter Bauelemente bekannt. Die Beeteinfassung besteht aus einander abwechselnden ersten und zweiten Bauelementen, wobei die ersten Bauelemente an beiden seitlichen Stirnseiten seitlich vorstehende, Verbindungshülsen enthaltende, untere Endabschnitte besitzen, während die zweiten Bauelemente an beiden seitlichen Stirnseiten mit seitlich vorstehenden, oberen Endabschnitten versehen sind, an denen jeweils ein nach unten abstehender Verbindungszapfen angeformt ist. Beim Aneinanderreihen dieser Bauelemente müssen jeweils zwei erste Bauelemente in einem der Länge eines zweiten Bauelementes entsprechenden Abstand nebeneinander auf einer Unterlage angeordnet werden, um dann in die entstandene Lücke ein zweites Bauelement einsetzen zu können, das an seinen beiden Enden jeweils mit dem von seinem oberen seitlichen Endabschnitt nach unten abstehenden Verbindungszapfen in die im seitlichen, unteren Endabschnitt des jeweils anschließenden ersten Bauelementes ausgebildete Verbindungshülse eingeführt werden muss.

Beim Herstellen von Begrenzungsmauern bzw. Beetbegrenzungen mit einachsiger Verbindung zwischen benachbarten Bauelementen ergeben sich in der Praxis eine Reihe von Nachteilen. Zum einen begrenzt der an den jeweiligen Endabschnitt anschließende Grundkörper des Bauelementes den Anschlusswinkel des benachbarten Bauelementes auf einen stumpfen Winkel bzw. auf einen Winkel von 90 Grad, bei dem die Grundkörper der benachbarten Bauelemente bereits seitlich aneinander stoßen. Dadurch kann die in der Praxis häufig anzutreffende Forderung nach dreieckigen Beetbegrenzungen mit unter spitzem Winkel aneinanderstoßenden Begrenzungsmauem nicht erfüllt werden. Zum anderen führt die jeweils einachsige Verbindung der Bauelemente untereinander zu einer geringen Stabilität bei Beetbegrenzungen, die nicht in sich geschlossen sind, und es können mit ihnen bei bereits bestehenden, in sich geschlossenen Beetbegrenzungen keine das jeweilige Beet unterteilende neuen Mauerabschnitte hergestellt werden, die mit der bereits bestehenden in sich geschlossenen Begrenzungsmauer stabil verbunden werden können. Mit diesen Bauelementen können auch keine die Steifigkeit der jeweiligen Beetbegrenzung erhöhende Knotenverbindungen realisiert werden. Um eine in sich stabile Beetbegrenzung zu erhalten, muss mit den untereinander einachsig verbundenen Bauelementen stets eine in sich geschlossene Begrenzungsmauer ohne spitzwinkelig aneinanderstoßende Mauerabschnitte hergestellt werden. Stabile Knotenverbindungen mit drei stirnseitig aneinanderstoßenden Bauelementen können nicht realisiert werden. Die untereinander jeweils einachsig verbundenen Bauelemente schränken die Gestaltungsmöglichkeiten beim Anlegen von Beeten bzw. von durch eine Begrenzungsmauer abgegrenzten Rasenflächen sehr stark ein.

### Zusammenfassung der Erfindung:

Aufgabe der Erfindung ist es, die genannten Nachteile zu beseitigen. Als Lösung wird eine Begrenzungsmauer mit aneinandergereihten und untereinander verbundenen, langgestreckten Bauelementen vorgeschlagen, die jeweils einen als nach unten offenes Hohlprofil ausgebildeten Grundkörper besitzen, der an seinen seitlichen Stirnseiten mit seitlich vorstehenden Endabschnitten versehen ist, die angeformte Verbindungselemente tragen. Diese Begrenzungsmauer ist erfindungsgemäß dadurch gekennzeichnet, dass zumindest zwei, an ihren seitlich vorstehenden, unteren Endabschnitten gleichartige Verbindungselemente tragende Bauelemente aneinandergereiht sind, die mit ihren nebeneinander angeordneten, unteren Endabschnitten eine nach oben offene Ausnehmung nach unten begrenzen, in der ein diese Bauelemente miteinander verbindendes Kupplungselement angeordnet ist, das die nebeneinander angeordneten, unteren Endabschnitte der Bauelemente überbrückt, und dass dieses Kupplungselement zu den Verbindungselementen der unteren Endabschnitte der Bauelemente komplementäre Verbindungselemente besitzt, mit denen das Kupplungselement auf die Verbindungselemente der nebeneinander angeordneten, unteren Endabschnitte der Bauelemente von oben aufgesetzt ist.

Diese Ausbildung erlaubt es, zwei mit ihren seitlichen Stirnseiten aneinandergereihte und über ein gemeinsames Kupplungselement miteinander verbundene Bauelemente unter einem beliebigen, spitzen, stumpfen oder rechten Winkel zueinander anzuordnen, wobei das Kupplungselement, falls erforderlich, auch schräg oder senkrecht zu beiden Bauelementen angeordnet werden kann. Beim Einsatz von Kupplungselementen mit drei oder vier komplementären Verbindungselementen können auch drei oder vier mit ihren seitlichen Stirnseiten aneinandergereihte Bauelemente, die an ihren seitlich nebeneinander angeordneten Verbindungselementen über das Kupplungselement miteinander verbunden sind, unter beliebigem Winkel zueinander angeordnet werden.

Die erfindungsgemäße Ausbildung erleichtert auch die Herstellung der Begrenzungsmauer, weil die Bauelemente dem gewünschten Verlauf der Begrenzungsmauer entsprechend auf dem Erdboden aufgesetzt werden können und die bereits am Erdboden aufsitzenden Bauelemente erst beim Aufsetzen der Kupplungselemente auf einander gegenseitig genau ausgerichtet werden müssen, wobei durch geringfügige Bodenunebenheiten hervorgerufenen Ausrichtfehler der auf dem Erdboden aufsitzenden Bauelemente auch erst durch das Aufsetzen der Kupplungselemente beseitigt werden können.

Darüber hinaus können sowohl die Kupplungselemente als auch die Bauelemente bei Beschädigung leicht ausgetauscht werden.

Gemäß einem weiteren Merkmal der Erfindung kann das Kupplungselement einen die nebeneinander angeordneten, unteren Endabschnitte der Bauelemente überbrückenden Grundkörper besitzen, der die komplementären Verbindungselemente trägt.

Gemäß einem weiteren Merkmal der Erfindung kann das Kupplungselement, das in die von den nebeneinander angeordneten, unteren Endabschnitten der Bauelemente gebildete Ausnehmung eingesetzt ist, diese Ausnehmung mit seinem Grundkörper zumindest teilweise ausfüllen.

Gemäß einem weiteren Merkmal der Erfindung kann die Oberseite des Kupplungselementes, das in die von den nebeneinander angeordneten, unteren Endabschnitten der Bauelemente gebildete Ausnehmung eingesetzt ist, mit seiner Oberseite mit den Oberseiten der Bauelemente fluchten.

Gemäß einem weiteren Merkmal der Erfindung können drei, an ihren seitlich vorstehenden, unteren Endabschnitten gleichartige Verbindungselemente tragende Bauelemente aneinandergereiht sein, die mit ihren nebeneinander angeordneten, unteren Endabschnitten eine nach oben offene Ausnehmung nach unten begrenzen, in der ein diese Bauelemente miteinander verbindendes Kupplungselement angeordnet ist, das die nebeneinander angeordneten, unteren Endabschnitte dieser Bauelemente überbrückt.

Diese Ausbildung erlaubt es, eine Begrenzungsmauer mit einem drei Bauelemente miteinander stabil verbindenden Knotenpunkt herzustellen. Darüber hinaus kann auch bei einer bereits bestehenden erfindungsgemäßen Begrenzungsmauer mit paarweise durch Kupplungselemente verbundenen Bauelementen ein drei Bauelemente miteinander stabil verbindender Knotenpunkt hergestellt werden, ohne die Anordnung der beiden bereits vorhandenen Bauelemente zu verändern. Zur Bildung dieses Knotenpunktes braucht lediglich das bereits vorhandene, nur zwei komplementäre Verbindungselemente aufweisende Kupplungselement gegen ein mit drei komplementären Verbindungselementen versehenes Kupplungselement ausgewechselt zu werden, welches auf die Verbindungselemente der beiden bereits vorhandenen Bauelemente und auf das Verbindungselement des hinzugekommenen dritten Bauelementes aufgesetzt wird.

Gemäß einem weiteren Merkmal der Erfindung kann das drei Bauelemente miteinander verbindende Kupplungselement einen langgestreckten Grundkörper besitzen, der drei in einer Reihe nebeneinander angeordnete, komplementäre Verbindungselemente trägt.

Gemäß einem weiteren Merkmal der Erfindung kann das drei Bauelemente miteinander verbindende Kupplungselement einen Grundkörper mit drei T-förmig angeordneten Schenkeln besitzen, die jeweils ein komplementäres Verbindungselement tragen.

Gemäß einem weiteren Merkmal der Erfindung kann das drei Bauelemente miteinander verbindende Kupplungselement einen Grundkörper mit drei sternförmig angeordneten Schenkeln besitzen, die jeweils ein komplementäres Verbindungselement tragen.

Gemäß einem weiteren Merkmal der Erfindung kann zum Verbinden von vier Bauelementen, die mit ihren gleichartige Verbindungselemente tragenden, seitlichen Endabschnitten nebeneinander angeordnet sind, ein diese Endabschnitte überbrückendes Kupplungselement vorgesehen sein , das einen Grundkörper mit drei T-förmig angeordneten Schenkeln besitzt, der an der Verbindungsstelle der drei Schenkel sowie an jedem einzelnen Schenkel jeweils ein komplementäres Verbindungselement trägt.

Gemäß einem weiteren Merkmal der Erfindung kann zum Verbinden von vier Bauelementen, die mit ihren gleichartige Verbindungselemente tragenden, seitlichen Endabschnitten nebeneinander angeordnet sind, ein diese Endabschnitte überbrückendes Kupplungselement vorgesehen sein, das einen Grundkörper mit vier sternförmig angeordneten Schenkeln besitzt, die jeweils ein komplementäres Verbindungselement tragen.

Gemäß einem weiteren Merkmal der Erfindung kann das Kupplungselement als von ihm abstehende Zapfen ausgebildete, komplementäre Verbindungselemente besitzen, die in die als nach oben offene Hülsen ausgebildeten, an den seitlich vorstehenden unteren Endabschnitten der Bauelemente angeformten Verbindungselemente von oben einsetzbar sind.

Gemäß einem weiteren Merkmal der Erfindung kann das Kupplungselement als Hülsen ausgebildete, komplementäre Verbindungselemente besitzen, die auf die als nach oben abstehende Zapfen ausgebildeten, an den seitlich vorstehenden unteren Endabschnitten der Bauelemente angeformten Verbindungselemente von oben aufsetzbar sind.

Gemäß einem weiteren Merkmal der Erfindung kann das Kupplungselement mit einem Erdspieß versehen sein.

Gemäß einem weiteren Merkmal der Erfindung kann zumindest ein als Zapfen ausgebildetes komplementäres Verbindungselement des Kupplungselementes als Erdspieß ausgebildet sein.

Gemäß einem weiteren Merkmal der Erfindung kann das Kupplungselement an seiner Oberseite mit einer Einstecköffnung für Dachbügel, Rankstangen oder dergleichen versehen sein.

Gemäß einem weiteren Merkmal der Erfindung kann die von den nebeneinander angeordneten, unteren Endabschnitten der aneinandergereihten Bauelemente nach unten begrenzte Ausnehmung, in der das die Bauelemente miteinander verbindende Kupplungselement aufgenommen ist, seitlich von ebenen Stirnflächen der Bauelemente begrenzt sein, die an den Bauelementen oberhalb von deren seitlich vorstehenden, unteren Endabschnitten angeordnet sind.

Die erfindungsgemäßen Bauelemente und die erfindungsgemäßen Kupplungselemente können als Spritzgussteile aus Kunststoff hergestellt sein. Nachstehend wird die Erfindung an Ausführungsbeispielen anhand der Zeichnungen näher erläutert.

### Kurze Beschreibung der Zeichnungen:

In den Zeichnungen zeigen:
- Fig .1: zwei nebeneinander angeordnete Bauelemente einer erfindungsgemäßen Begrenzungsmauer mit einem über den Verbindungselementen der Bauelemente angeordneten Kupplungselement mit zwei nebeneinander angeordneten, komplementären Verbindungselementen,
- Fig. 2: ähnlich der Fig. 1, zwei nebeneinander angeordnete und durch ein mit zwei komplementären Verbindungselementen versehenes Kupplungselement verbundene Bauelemente einer erfindungsgemäßen Begrenzungsmauer,
- Fig. 3: ein sternförmig ausgebildetes Kupplungselement mit vier Schenkeln mit jeweils einem komplementären Verbindungselement,
- Fig. 4: ein Kupplungselement mit zwei nebeneinander angeordneten, komplementären Verbindungselementen,
- Fig. 5: ein Kupplungselement mit komplementären Verbindungselementen, von denen eines als Erdspieß ausgebildet ist,
- Fig. 6: eine erfindungsgemäße Begrenzungsmauer mit einem aus drei Bauelementen gebildeten Knotenpunkt und einem über dem Knotenpunkt angeordneten, T-förmigen Kupplungselement mit drei komplementären Verbindungselementen,
- Fig. 7: den Knotenpunkt der Begrenzungsmauer gemäß Fig. 6 mit den drei durch das T-förmige Kupplungselement stabil miteinander verbundenen Bauelementen und
- Fig. 8: eine erfindungsgemäße Begrenzungsmauer mit einem aus drei Bauelementen gebildeten Knotenpunkt und einem über dem Knotenpunkt angeordneten, kammförmigen Kupplungselement mit drei, in einer Reihe nebeneinander angeordneten, komplementären Verbindungselementen.

### Beschreibung von Ausführungsbeispielen:

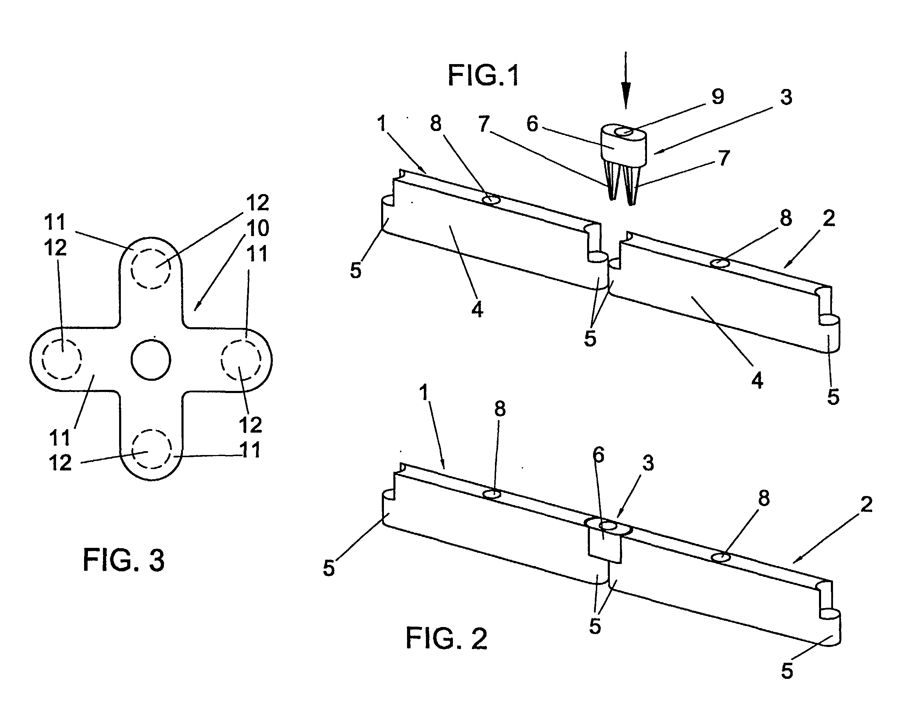

Die Fig. 1 und 2 zeigen einen Abschnitt einer Begrenzungsmauer mit zwei entlang einer geraden Linie aneinandergereihten, langgestreckten Bauelementen 1, 2, die mit ihren seitlichen Stirnseiten aneinander stoßen und dort durch ein Kupplungselement 3 stabil miteinander verbunden sind. Jedes Bauelement 1, 2 besitzt einen langgestreckten, im wesentlichen quaderförmigen Grundkörper 4, der als nach unten offenes Hohlprofil ausgebildet ist und an seinen seitlichen Stirnseiten jeweils ein angeformtes Verbindungselement 5 trägt. Die beiden Verbindungselemente 5 eines Bauelementes 1 bzw. 2 sind untereinander gleich. Das Kupplungselement 3 besitzt einen Grundkörper 6, der zwei nebeneinander angeordnete, untereinander gleiche und zu den Verbindungselementen 5 der Bauelemente 1, 2 komplementäre Verbindungselemente 7 trägt. Zum Verbinden der beiden, mit ihren seitlichen Verbindungselementen 5 aneinanderstoßenden Bauelemente 1 und 2 wird das Kupplungselement 3 mit seinen komplementären Verbindungselementen 7 von oben auf die einander benachbarten Verbindungselemente 5 der beiden Bauelemente 1, 2 aufgeschoben.

Die Verbindungselemente 5 der Bauelemente 1, 2 sind in dem dargestellten Ausführungsbeispiel als vertikal verlaufende Hülsen ausgebildet und die komplementären Verbindungselemente 7 des Kupplungselementes 3 als in die Hülsen von oben einsteckbare Zapfen, die vom Grundkörper 6 des Kupplungselementes 7 nach unten ragen. Alternativ dazu können die Verbindungselemente 5 der Bauelemente 1,2 als nach oben weisende Zapfen und die komplementären Verbindungselemente 7 des Kupplungselementes 3 als in dessen Grundkörper 6 integrierte Hülsen ausgebildet sein.

An der Oberseite der Bauelemente 1, 2 bzw. des Kupplungselementes 3 können, vorzugsweise jeweils in der Mitte des Elementes angeordnete, Einstecköffnungen 8, 9 für Dachbügel, Rankstangen oder Erdspieße etc. vorgesehen sein. Die Einstecköffnungen 8, 9 können einen quadratischen oder einen kreisförmigen Querschnitt besitzen.

Fig. 3 zeigt ein sternförmig ausgebildetes Kupplungselement 10, das vier sternförmig angeordnete Schenkel 11 besitzt, die jeweils ein komplementäres Verbindungselement 12 tragen.

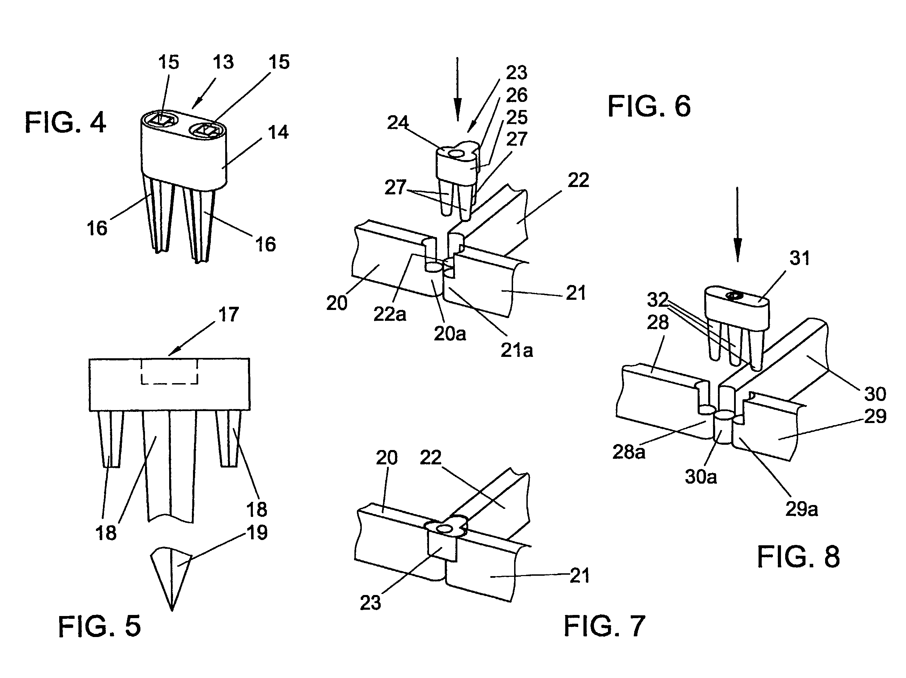

Fig. 4 zeigt ein Kupplungselement 13 mit einem Grundkörper 14, der an seiner Oberseite zwei quadratische Einstecköffnungen 15 besitzt und an seiner Unterseite zwei nebeneinander angeordnete, komplementäre Verbindungselemente 16 trägt, die als nach unten ragende Zapfen ausgebildet sind, die von sternförmig angeordneten ebenen Wandstücken gebildet werden.

Fig. 5 zeigt ein Kupplungselement 17, bei dem eines der jeweils als nach unten ragender Zapfen ausgebildeten, komplementären Verbindungselemente 18 nach unten verlängert und als Erdspieß 19 ausgebildet ist.

Die Fig. 6 und 7 zeigen einen Abschnitt einer erfindungsgemäßen Begrenzungsmauer, der als Knotenpunkt ausgebildet ist, an dem drei mit ihren Verbindungselementen aneinanderstoßende Bauelemente 20, 21, 22 mittels eines T-förmigen Kupplungselementes 23 stabil miteinander verbunden sind. Zwei Bauelemente 20, 21 sind entlang einer geraden Linie angeordnet und stoßen mit ihren angeformten Verbindungselementen 20a und 21 a unmittelbar aneinander. Das dritte Bauelement 22 ist quer zu den beiden anderen Bauelementen 20, 21 angeordnet und stößt mit seinem angeformten Verbindungselement 22a seitlich an die Verbindungselemente 20a und 21 a der beiden anderen Bauelemente 20, 21 an. Das T-förmige Kupplungselement 23 besitzt einen Grundkörper mit drei T-förmig angeordneten Schenkeln 24, 25, 26, die jeweils ein, als nach unten ragender Zapfen ausgebildetes, komplementäres Verbindungselement 27 tragen. Zum Verbinden der drei Bauelemente 20, 21, 22 wird das Kupplungselement 23 aus der in Fig. 6 dargestellten Position nach unten in die in Fig. 7 dargestellte Position bewegt, wobei seine drei als Zapfen ausgebildeten, komplementären Verbindungselemente 27 in die jeweils als Hülsen ausgebildeten Verbindungselemente 20a, 21 a, 22a der drei Bauelemente 20, 21, 22 eingeschoben werden. Jedes der drei durch das T-förmige Kupplungselement 23 stabil miteinander verbundenen Bauelemente 20, 21, 22 kann, falls erforderlich, um das in sein Verbindungselement 20a, 21a, 22a eingesetzte komplementäre Verbindungselement 27 des Kupplungselementes 23 verschwenkt werden, wobei auch spitze Winkel zwischen zwei benachbarten Bauelementen realisiert werden können.

Fig. 8 zeigt einen Abschnitt einer erfindungsgemäßen Begrenzungsmauer, der als Knotenpunkt ausgebildet ist, an dem drei mit ihren, jeweils als Hülsen ausgebildeten Verbindungselementen 28a, 29a, 30a aneinanderstoßende Bauelemente 28, 29, 30 durch ein kammförmiges Kupplungselement 31 stabil miteinander verbunden werden. Zwei Bauelemente 28, 29 sind entlang einer geraden Linie angeordnet und das dritte Bauelement 30 ist quer dazu angeordnet, wobei das angeformte Verbindungselement 30a des dritten Bauelementes 30 zwischen den angeformten Verbindungselementen 28a und 29a der beiden anderen Bauelemente 28, 29 liegt. Das kammförmige Kupplungselement 31 besitzt drei, in einer Reihe nebeneinander angeordnete und jeweils als Zapfen ausgebildete, komplementäre Verbindungselemente 32. Diese sind auf die als Hülsen ausgebildeten Verbindungselemente 28a, 29a, 30a der drei Bauelemente 28, 29, 30 ausgerichtet. Zum Verbinden der drei Bauelemente 28, 29, 30 wird das kammförmige Kupplungselement 31 mit seinen drei Zapfen 32 in die Hülsen 28a, 29a, 30a der drei Bauelemente 28, 29, 30 eingesetzt.

Die erfindungsgemäßen Kupplungselemente sind so ausgebildet, dass sie mit ihrem Grundkörper die aneinanderstoßenden Verbindungselemente der Bauelemente überlappen. Vorzugsweise füllt das jeweilige Kupplungselement mit seinem Grundkörper den an den Stirnseiten der aneinanderstoßenden Bauelemente freibleibenden Zwischenraum aus, wobei zwischen dem Kupplungselement und dem jeweiligen Bauelement nur mehr das zum Aufsetzen des Kupplungselementes auf das Verbindungselement des betreffenden Bauelementes erforderlich Spiel frei bleibt.

Die seitlichen Stirnseiten der Bauelemente können oberhalb der angeformten Hülsen bzw. oberhalb des angeformten unteren Endes der nach oben ragenden Zapfen eben ausgebildet sein.

## Patentansprüche

1. Begrenzungsmauer, insbesonders für Beeteinfassungen, Frühbeete, Abgrenzungen in Garten- und Grünanlagen oder dergleichen, mit aneinandergereihten und untereinander verbundenen, langgestreckten Bauelementen (1, 2), die jeweils einen als nach unten offenes Hohlprofil ausgebildeten Grundkörper (4) besitzen, der an seinen seitlichen Stirnseiten mit seitlich vorstehenden Endabschnitten versehen ist, die angeformte Verbindungselemente (5) tragen, ***dadurch gekennzeichnet,* dass** zumindest zwei, an ihren seitlich vorstehenden, unteren Endabschnitten gleichartige Verbindungselemente (5) tragende Bauelemente (1, 2) aneinandergereiht sind, die mit ihren nebeneinander angeordneten, unteren Endabschnitten eine nach oben offene Ausnehmung nach unten begrenzen, in der ein diese Bauelemente (1, 2) miteinander verbindendes Kupplungselement (3) angeordnet ist, das die nebeneinander angeordneten, unteren Endabschnitte der Bauelemente (1, 2) überbrückt, und dass dieses Kupplungselement (3) zu den Verbindungselementen (5) der unteren Endabschnitte der Bauelemente (1, 2) komplementäre Verbindungselemente (7) besitzt, mit denen das Kupplungselement (3) auf die Verbindungselemente (5) der nebeneinander angeordneten, unteren Endabschnitte der Bauelemente (1, 2) von oben aufgesetzt ist.

2. Begrenzungsmauer nach Anspruch 1, **dadurch gekennzeichnet, dass** das Kupplungselement (3, 10, 13, 17, 23, 31) einen die nebeneinander angeordneten, unteren Endabschnitte der Bauelemente (1, 2, 20, 21, 22, 28, 29, 30) überbrückenden Grundkörper (6, 11, 14, 24) besitzt, der die komplementären Verbindungselemente (7, 12, 16, 18, 27, 32) trägt.

3. Begrenzungsmauer nach Anspruch 1, **dadurch gekennzeichnet, dass** das Kupplungselement (3, 10, 13, 17, 23, 31), das in die von den nebeneinander angeordneten, unteren Endabschnitten der Bauelemente (1, 2, 20, 21, 22, 28, 29, 30) gebildete Ausnehmung eingesetzt ist, diese Ausnehmung mit seinem Grundkörper (6, 11, 14, 24) zumindest teilweise ausfüllt.

4. Begrenzungsmauer nach einem der Ansprüche 1 bis 3, **dadurch gekennzeichnet, dass** die Oberseite des Kupplungselementes (3, 10, 13, 17, 23, 31), das in die von den nebeneinander angeordneten, unteren Endabschnitten der Bauelemente (1, 2, 20, 21, 22, 28, 29, 30) gebildete Ausnehmung eingesetzt ist, mit seiner Oberseite mit den Oberseiten der Bauelemente (1, 2, 20, 21, 22, 28, 29, 30) fluchtet.

5. Begrenzungsmauer nach einem der Ansprüche 1 bis 4, **dadurch gekennzeichnet, dass** drei, an ihren seitlich vorstehenden, unteren Endabschnitten gleichartige Verbindungselemente (20a, 21a, 22a, 28a, 29a, 30a) tragende Bauelemente (20, 21, 22, 28, 29, 30) aneinandergereiht sind, die mit ihren nebeneinander angeordneten, unteren Endabschnitten eine nach oben offene Ausnehmung nach unten begrenzen, in der ein diese Bauelemente (20, 21, 22, 28, 29, 30) miteinander verbindendes Kupplungselement (23, 31) angeordnet ist, das die nebeneinander angeordneten, unteren Endabschnitte dieser Bauelemente (20, 21, 22, 28, 29, 30) überbrückt.

6. Begrenzungsmauer nach Anspruch 5, **dadurch gekennzeichnet, dass** Kupplungselement (31) einen langgestreckten Grundkörper besitzt, der drei in einer Reihe nebeneinander angeordnete, komplementäre Verbindungselemente (32) trägt.

7. Begrenzungsmauer nach Anspruch 5, **dadurch gekennzeichnet, dass** Kupplungselement (23) einen Grundkörper mit drei T-förmig angeordneten Schenkeln (24, 25, 26) besitzt, die jeweils ein komplementäres Verbindungselement (27) tragen.

8. Begrenzungsmauer nach Anspruch 5, **dadurch gekennzeichnet, dass** Kupplungselement einen Grundkörper mit drei sternförmig angeordneten Schenkeln besitzt, die jeweils ein komplementäres Verbindungselement tragen.

9. Begrenzungsmauer nach einem der Ansprüche 1 bis 4, **dadurch gekennzeichnet, dass** zum Verbinden von vier Bauelementen, die mit ihren gleichartige Verbindungselemente tragenden, seitlichen Endabschnitten nebeneinander angeordnet sind, ein diese Endabschnitte überbrückendes Kupplungselement vorgesehen ist, das einen Grundkörper mit drei T-förmig angeordneten Schenkeln besitzt, der an der Verbindungsstelle der drei Schenkel sowie an jedem einzelnen Schenkel jeweils ein komplementäres Verbindungselement trägt.

10. Begrenzungsmauer nach einem der Ansprüche 1 bis 4, **dadurch gekennzeichnet, dass** zum Verbinden von vier Bauelementen, die mit ihren gleichartige Verbindungselemente tragenden, seitlichen Endabschnitten nebeneinander angeordnet sind, ein diese Endabschnitte überbrückendes Kupplungselement (10) vorgesehen ist, das einen Grundkörper mit vier sternförmig angeordneten Schenkeln (11) besitzt, die jeweils ein komplementäres Verbindungselement (12) tragen.

11. Begrenzungsmauer nach einem der Ansprüche 1 bis 10, **dadurch gekennzeichnet, dass** das Kupplungselement (3, 10, 13, 17, 23, 31) als von ihm abstehende Zapfen ausgebildete, komplementäre Verbindungselemente (7, 12, 16, 18, 27, 32) besitzt, die in die als nach oben offene Hülsen ausgebildeten, an den seitlich vorstehenden unteren Endabschnitten der Bauelemente (1, 2, 20, 21, 22, 28, 29, 30) angeformten Verbindungselemente (5, 20a, 21a, 22a, 28a, 29a, 30a) von oben einsetzbar sind.

12. Begrenzungsmauer nach einem der Ansprüche 1 bis 10, **dadurch gekennzeichnet, dass** das Kupplungselement (3, 10, 13, 17, 23, 31) als Hülsen ausgebildete, komplementäre Verbindungselemente (7,12, 16, 18, 27, 32) besitzt, die auf die als nach oben abstehende Zapfen ausgebildeten, an den seitlich vorstehenden unteren Endabschnitten der Bauelemente (1, 2, 20, 21, 22, 28, 29, 30) angeformten Verbindungselemente (5, 20a, 21a, 22a, 28a, 29a, 30a) von oben aufsetzbar sind.

13. Begrenzungsmauer nach einem der Ansprüche 1 bis 12, **dadurch gekennzeichnet, dass** das Kupplungselement mit einem Erdspieß versehen ist.

14. Begrenzungsmauer nach Anspruch 13, **dadurch gekennzeichnet, dass** zumindest ein als Zapfen ausgebildetes komplementäres Verbindungselement (18) des Kupplungselementes (17) als Erdspieß (19) ausgebildet ist.

15. Begrenzungsmauer nach einem der Ansprüche 1 bis 14, **dadurch gekennzeichnet, dass** das Kupplungselement (3, 10, 13, 17, 23, 31) an seiner Oberseite mit einer Einstecköffnung (9, 15) für Dachbügel, Rankstangen oder dergleichen versehen ist.

16. Begrenzungsmauer nach einem der Ansprüche 1 bis 15, **dadurch gekennzeichnet, dass** die von den nebeneinander angeordneten, unteren Endabschnitten der aneinandergereihten Bauelemente nach unten begrenzte Ausnehmung, in der das die Bauelemente miteinander verbindende Kupplungselement aufgenommen ist, seitlich von ebenen Stirnflächen der Bauelemente begrenzt ist, die an den Bauelementen oberhalb von deren seitlich vorstehenden, unteren Endabschnitten angeordnet sind.

## Claims

1. Delimiting wall, in particular for borders, cold frames, boundaries in gardens and grassed areas or the like, having elongate structural elements (1, 2) which are arranged beside each other and which are connected to each other and which each have a base member (4) which is constructed as a downwardly open hollow sectional member and which is provided, at the lateral end faces thereof, with laterally protruding end portions which carry formed-on connection elements (5), **characterised in that** at least two structural elements (1, 2), which carry identical connection elements (5) at the laterally protruding lower end portions thereof, are arranged beside each other and delimit in a downward direction, with the mutually adjacent lower end portions thereof, an upwardly open recess, in which a coupling element (3) is arranged which connects these structural elements (1, 2) to each other and which bridges the mutually adjacent lower end portions of the structural elements (1, 2), and **in that** this coupling element (3) has connection elements (7) which are complementary to the connection elements (5) of the lower end portions of the structural elements (1, 2) and by means of which the coupling element (3) is placed from above onto the connection elements (5) of the mutually adjacent lower end portions of the structural elements (1, 2).

2. Delimiting wall according to claim 1, **characterised in that** the coupling element (3, 10, 13, 17, 23, 31) has a base member (6, 11, 14, 24) which bridges the mutually adjacent lower end portions of the structural elements (1, 2, 20, 21, 22, 28, 29, 30) and which carries the complementary connection elements (7, 12, 16, 18, 27, 32).

3. Delimiting wall according to claim 1, **characterised in that** the coupling element (3, 10, 13, 17, 23, 31), which is inserted into the recess formed by the mutually adjacent lower end portions of the structural elements (1, 2, 20, 21, 22, 28, 29, 30), at least partially fills this recess with the base member (6, 11, 14, 24) thereof.

4. Delimiting wall according to any one of claims 1 to 3, **characterised in that** the upper side of the coupling element (3, 10, 13, 17, 23, 31), which is inserted into the recess formed by the mutually adjacent lower end portions of the structural elements (1, 2, 20, 21, 22, 28, 29, 30), is aligned at the upper side thereof with the upper sides of the structural elements (1, 2, 20, 21, 22, 28, 29, 30).

5. Delimiting wall according to any one of claims 1 to 4, **characterised in that** three structural elements (20, 21, 22, 28, 29, 30), which carry identical connection elements (20a, 21a, 22a, 28a, 29a, 30a) at the laterally protruding lower end portions thereof, are arranged beside each other and delimit in a downward direction, with the mutually adjacent lower end portions thereof, an upwardly open recess, in which a coupling element (23, 31) is arranged which connects these structural elements (20, 21, 22, 28, 29, 30) to each other and which bridges the mutually adjacent lower end portions of these structural elements (20, 21, 22, 28, 29, 30).

6. Delimiting wall according to claim 5, **characterised in that** a coupling element (31) has an elongate base member which carries three complementary connection elements (32) which are arranged in succession beside each other.

7. Delimiting wall according to claim 5, **characterised in that** a coupling element (23) has a base member having three sides (24, 25, 26) which are arranged in a T-like manner and which each carry a complementary connection element (27).

8. Delimiting wall according to claim 5, **characterised in that** a coupling element has a base member having three sides which are arranged in a star-like manner and which each carry a complementary connection element.

9. Delimiting wall according to any one of claims 1 to 4, **characterised in that**, in order to connect four structural elements which are arranged beside each other at the lateral end portions thereof which carry identical connection elements, there is provided a coupling element which bridges these end portions and which has a base member which has three sides arranged in a T-like manner and which carries a complementary connection element at the connection point of the three sides and at each individual side, respectively.

10. Delimiting wall according to any one of claims 1 to 4, **characterised in that**, in order to connect four structural elements which are arranged beside each other at the lateral end portions thereof which carry identical connection elements, there is provided a coupling element (10) which bridges these end portions and which has a base member having four sides (11) which are arranged in a star-like manner and which each carry a complementary connection element (12).

11. Delimiting wall according to any one of claims 1 to 10, **characterised in that** the coupling element (3, 10, 13, 17, 23, 31) has complementary connection elements (7, 12, 16, 18, 27, 32) which are constructed as pins protruding therefrom and which can be inserted from above into the connection elements (5, 20a, 21a, 22a, 28a, 29a, 30a), which are constructed as upwardly open sleeves and which are formed on the laterally protruding lower end portions of the structural elements (1, 2, 20, 21, 22, 28, 29, 30).

12. Delimiting wall according to any one of claims 1 to 10, **characterised in that** the coupling element (3, 10, 13, 17, 23, 31) has complementary connection elements (7, 12, 16, 18, 27, 32) which are constructed as sleeves and which can be placed from above onto the connection elements (5, 20a, 21a, 22a, 28a, 29a, 30a) which are constructed as upwardly protruding pins and which are formed on the laterally protruding lower end portions of the structural elements (1, 2, 20, 21, 22, 28, 29, 30).

13. Delimiting wall according to any one of claims 1 to 12, **characterised in that** the coupling element is provided with a soil stake.

14. Delimiting wall according to claim 13, **characterised in that** at least one complementary connection element (18) of the coupling element (17), which connection element (18) is constructed as a pin, is constructed as a soil stake (19).

15. Delimiting wall according to any one of claims 1 to 14, **characterised in that** the coupling element (3, 10, 13, 17, 23, 31) is provided at the upper side thereof with an insertion opening (9, 15) for curved cover members, stakes or the like.

16. Delimiting wall according to any one of claims 1 to 15, **characterised in that** the recess, which is delimited in a downward direction by the mutually adjacent lower end portions of the structural elements arranged beside each other, and in which the coupling element which connects the structural elements to each other is received, is laterally delimited by flat end faces of the structural elements, which end faces are arranged on the structural elements above the laterally protruding lower end portions thereof.

## Revendications

1. Muret de délimitation, notamment pour des bordures de parterre, des châssis vitrés, des délimitations de jardins et d'espaces verts ou analogues, comprenant des éléments (1, 2) de construction oblong rangés les uns à côté des autres et reliés entre eux, qui ont respectivement une embase (4) constituée d'un profilé creux ouvert vers le bas et munie sur ses côtés frontaux latéraux de parties d'extrémité en saillie latéralement, dont sont issus d'un seul tenant des éléments (5) de liaison, **caractérisé en ce que**, au moins deux éléments (1, 2) de construction, portant sur leurs parties d'extrémité inférieure en saillie latéralement des éléments (5) de liaison de même type, sont rangés l'un à côté de l'autre, délimitent vers le bas par leurs parties d'extrémité inférieures, disposée côte à côte, un logement ouvert vers le haut, dans lequel est placé un élément (3) d'accouplement reliant entre eux ces éléments (1, 2) de construction et recouvrant les parties d'extrémité inférieures disposées côte à côte des éléments (1, 2) de construction, et **en ce que** cet élément (3) d'accouplement a des éléments (7) de liaison complémentaires des éléments (5) de liaison des parties d'extrémité inférieures des éléments (1, 2) de construction, par lesquels l'élément (3) d'accouplement est posé par le haut sur les éléments (5) de liaison des parties d'extrémité inférieures disposées côte à côte des éléments (1, 2) de construction.

2. Muret de délimitation suivant la revendication 1, **caractérisé en ce que** l'élément (3, 10, 13, 17, 23, 31 ) d'accouplement a une embase (6, 11, 14, 24) recouvrant les parties d'extrémité inférieures disposées côte à côte des éléments (1, 2, 20, 21, 22, 28, 29, 30) de construction et portant les éléments (7,12. 16, 18, 27, 32) complémentaires de liaison.

3. Muret de délimitation suivant la revendication 1, **caractérisé en ce que** l'élément (3, 10, 13, 17, 23, 31) d'accouplement, qui est inséré dans le logement formé par des parties d'extrémité inférieures disposées côte à côte des éléments (1, 2, 20, 21, 22, 28, 29, 30) de construction, emplit au moins en partie ce logement par son embase (6, 11, 14, 24).

4. Muret de délimitation suivant l'une des revendications 1 à 3, **caractérisé en ce que** le côté supérieur de l'élément (3, 10, 13, 17, 23, 31) d'accouplement, qui est inséré dans le logement formé par les parties d'extrémité inférieures disposées côte à côte des éléments (1, 2, 20, 21, 22, 28, 29, 30) de construction, est à effleurement par son côté supérieur avec les côtés supérieurs des éléments (1, 2, 20, 21, 22, 28, 29, 30) de construction.

5. Muret de délimitation suivant l'une des revendications 1 à 4, **caractérisé en ce que** trois éléments (20, 21, 22, 28, 29, 30) de construction, portant sur leurs parties d'extrémité inférieures en saillie latéralement des éléments (20a, 21 a, 22a, 28a, 29a, 30a) de liaison de même type, sont rangés les uns à côté des autres et délimitent vers le bas par leurs parties d'extrémité inférieures disposées côte à côte, un logement ouvert vers le haut, dans lequel est placé un élément (23, 31) d'accouplement qui relie entre eux ces éléments (20, 21, 22, 28, 29, 30) de construction et qui recouvre les parties d'extrémité inférieures disposées côte à côte de ces éléments (20, 21, 22, 28, 29, 30) de construction.

6. Muret de délimitation suivant la revendication 5, **caractérisé en ce que** l'élément (31) d'accouplement, a une embase oblongue qui porte trois éléments (32) de liaison complémentaire disposés côte à côte, suivant une rangée.

7. Muret de délimitation suivant la revendication 5, **caractérisé en ce que** l'élément (23) d'accouplement a une embase ayant trois branches (24, 25, 26) disposées en forme de T, qui portent respectivement un élément (27) complémentaire de liaison.

8. Muret de délimitation suivant la revendication 5, **caractérisé en ce que** l'élément d'accouplement a une embase ayant trois branches disposées en étoile qui portent respectivement un élément complémentaire de liaison.

9. Muret de délimitation suivant l'une des revendications 1 à 4, **caractérisé en ce que** pour l'assemblage de quatre éléments de construction, qui sont disposés côte à côte par leurs parties d'extrémité latérales, portant des éléments de liaison de même type, il est prévu un élément d'accouplement recouvrant ces parties d'extrémité et ayant une embase à trois branches disposées en forme de T, qui portent au point de liaison des trois branches, ainsi que sur chaque branche individuelle, respectivement un élément complémentaire de liaison.

10. Muret de délimitation suivant l'une des revendications 1 à 4, **caractérisé en ce que** pour l'assemblage de quatre éléments de construction, qui sont disposés côte à côte par leurs parties d'extrémité latérales, portant des éléments de liaison de même type, il est prévu un élément (10) d'accouplement recouvrant ces parties d'extrémité et ayant une embase à quatre branches (11) disposées en étoile, qui portent respectivement un élément (12) complémentaire de liaison.

11. Muret de délimitation suivant l'une des revendications 1 à 10, **caractérisé en ce que** l'élément (3, 10, 13, 17, 23, 31) d'accouplement, a des éléments (7, 12, 16, 18, 27, 32) complémentaires de liaison, qui sont constitués en tenons en faisant saillie et qui peuvent être insérés par le haut dans les éléments (5, 20a, 21 a, 22a, 28a, 29a, 30a) de liaison, constitués en manchon ouvert vers le haut et issus d'un seul tenant des parties d'extrémité inférieures en saillie latéralement des éléments (1, 2, 20, 21, 22, 28, 29, 30) de construction.

12. Muret de délimitation suivant l'une des revendications 1 à 10, **caractérisé en ce que** l'élément (3, 10, 13, 17, 23, 31) d'accouplement, a des éléments (7, 12, 16, 18, 27, 32) complémentaires de liaison, constitués en manchon, qui peuvent être emmanchés par le haut sur les éléments (5, 20a, 21 a, 22a, 28a, 29a, 30a) de liaison, constitués en tenon en saillie vers le haut et issus d'un seul tenant des parties d'extrémité inférieures en saillie latéralement des éléments (1, 2, 20, 21,22,28,29, 30) de construction.

13. Muret de délimitation suivant l'une des revendications 1 à 12, **caractérisé en ce que** l'élément d'accouplement est muni d'une perche de terre.

14. Muret de délimitation suivant la revendication 13, **caractérisé en ce que** au moins un élément (18) complémentaire de liaison, constitué en tenon, de l'élément (7) d'accouplement est constitué en perche (19) de terre.

15. Muret de délimitation suivant l'une des revendications 1 à 14, **caractérisé en ce que** l'élément (3, 10, 13, 17, 23, 31) d'accouplement est muni sur son côté supérieur d'une ouverture (9, 15) d'emmanchement d'étriers de toit, de tuteurs ou analogues.

16. Muret de délimitation suivant l'une des revendications 1 à 15, **caractérisé en ce que** le logement délimité vers le bas par les parties d'extrémité inférieures disposées côte à côte des éléments de construction rangés les uns à côté des autres, dans lequel est logé l'élément d'accouplement reliant entre eux les éléments de construction, est délimitée latéralement par des surfaces frontales planes des éléments de construction, qui sont disposés sur les éléments de construction au-dessus de leurs parties d'extrémité inférieures en saillie latéralement.
